# EUROPÄISCHE PATENTSCHRIFT

(11) **EP 2 911 907 B1**
(45) Veröffentlichungstag und Bekanntmachung des Hinweises auf die Patenterteilung: **25.05.2016**
(21) Anmeldenummer: 13779739.5
(22) Anmeldetag: 18.10.2013
(51) Int. Cl.: B60K 23/08

(54) **VERFAHREN UND SYSTEM ZUM BETREIBEN EINES ANTRIEBSSTRANGS EINES KRAFTWAGENS**
METHOD AND SYSTEM FOR OPERATING A DRIVE TRAIN OF A MOTOR VEHICLE
PROCÉDÉ ET SYSTÈME POUR FAIRE FONCTIONNER UNE CHAÎNE CINÉMATIQUE D'UN VÉHICULE AUTOMOBILE

(30) Priorität: 24.10.2012 DE 102012020906
(43) Veröffentlichungstag der Anmeldung: 02.09.2015
(73) Patentinhaber: Audi AG, 85045 Ingolstadt (DE)
(72) Erfinder: STRASSER, Sebastian, 85051 Ingolstadt (DE); BÄR, Michael, 85049 Ingolstadt (DE)
(74) Vertreter: Lehle, Josef
(86) Internationale Anmeldenummer: PCT/EP2013/003143
(87) Internationale Veröffentlichungsnummer: WO 2014/063800

(56) Entgegenhaltungen:
- GB-A- 2 488 241
- US-A1- 2010 250 056
- US-A1- 2010 262 326

## Beschreibung

Die Erfindung betrifft ein Verfahren zum Betreiben eines Antriebsstrangs eines Kraftwagens sowie ein System zum Betreiben eines Antriebsstrangs eines Kraftwagens der in den Oberbegriffen der unabhängigen Ansprüche angegebenen Art.

Ein derartiges Verfahren ist beispielsweise aus der DE 3 312 694 A1 bekannt. Zum Betreiben eines Antriebsstrangs eines Kraftwagens wird zumindest eine eine Bewegung des Kraftwagens quantifizierende und/oder beeinflussende Größe erfasst und ein Allradantrieb des Kraftwagens in Abhängigkeit von der Größe zugeschaltet.

Die DE 3 302 936 A1 zeigt ebenfalls ein derartiges Verfahren zum Betreiben eines Antriebsstrangs eines Kraftwagens, bei welchem zumindest eine eine Bewegung des Kraftwagens quantifizierende und/oder beeinflussende Größe erfasst und ein Allradantrieb des Kraftwagens in Abhängigkeit von dieser Größe zugeschaltet wird.

Die US 6 101 439 zeigt ein Verfahren zum Betreiben eines Verteilergetriebes für einen allradgetriebenen Kraftwagen.

Die DE 19 600 734 C2 zeigt ein Verfahren, bei welchem Daten zu einer Fahrumgebung eines Kraftwagens und Daten zur Positionsbestimmung des Kraftwagens sowie Daten, die Aufschluss über einen Fahrzustand des Kraftwagens geben, miteinander zu verknüpft, und zur kombinierten Ansteuerung einer Motorsteuerung, einer Getriebesteuerung, eines Allradantriebes, einer oder mehrerer Differenzialsperren, eines ABS, eines Fahrwerks, einer Lenkung oder dergleichen verwendet.

Die gattungsgemäße GB 2488241 A1 zeigt ein Verfahren zum Aktivieren eines Allradantriebs eines Kraftwagens. Anhand einer oder mehrerer Parameter wird abgeschätzt, ob zukünftig mit einer Fahrsituation zu rechnen ist, welche einen Wechsel von einem Zweiradantrieb zu einem Allradantrieb erforderlich macht. Als Parameter werden z.B. ein aktuelle Beschleunigung, ein Lenkwinkeleinschlag oder dergleichen herangezogen.

Die US 2010/0262326 A1 zeigt ebenfalls ein Verfahren zum Aktivieren eines Allradantriebs eines Kraftwagens. Anhand einer oder mehrerer Parameter wird abgeschätzt, ob zukünftig mit einer Fahrsituation zu rechnen ist, welche einen Wechsel von einem Zweiradantrieb zu einem Allradantrieb erforderlich macht. Als Parameter werden z.B. ein aktuelle Beschleunigung, ein Lenkwinkeleinschlag oder dergleichen herangezogen.

Die US 2010/0250056 A1 zeigt ein Verfahren zum Verteilen eines Antriebsmoments eines Kraftwagens zwischen Vorder- und Hinterrädern. In Abhängigkeit von einer erfassten Steigung eines Straßenabschnitts, auf welchem der Kraftwagen fährt, wird das Antriebsmoment zwischen den Vorderund Hinterrädern verändert noch bevor es zu einem Durchdrehen an den Rädern kommen kann.

Es ist die Aufgabe der vorliegenden Erfindung, ein Verfahren und ein System zum Betreiben eines Antriebsstrangs eines Kraftwagens der eingangs genannten Art bereitzustellen, mittels welchen ein zuschaltbarer Allradantrieb eines Kraftwagens auf verbesserte Art und Weise eingesetzt werden kann.

Diese Aufgabe wird durch ein Verfahren und ein System zum Betreiben eines Antriebsstrangs eines Kraftwagens mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei einem erfindungsgemäßen Verfahren zum Betreiben eines Antriebsstrangs eines Kraftwagens wird zumindest eine eine Bewegung des Kraftwagens quantifizierende und/oder beeinflussende Größe erfasst und ein Allradantrieb des Kraftwagens in Abhängigkeit von der Größe zugeschaltet, wobei sich das erfindungsgemäße Verfahren dadurch auszeichnet, dass basierend auf der zumindest einen Größe abgeschätzt wird, ob eine relevante Fahrsituation bevorsteht, und nur in diesem Fall der Allradantrieb vor Eintreten der relevanten Situation zugeschaltet wird. Mit anderen Worten wird anhand der zumindest einen die Bewegung des Kraftwagens quantifizierenden und/oder beeinflussenden Größe überwacht, ob mit einer relevanten Fahrsituation zu rechnen ist, wobei nur in diesem Fall der Allradantrieb rechtzeitig zugeschaltet wird, bevor die relevante Situation eintreten kann. Unter einer relevanten Situation ist beispielsweise ein an der permanent angetriebenen Primärachse auftretender Radschlupf, ein Unter- oder Übersteuern und dergleichen zu verstehen. Diese Aufzählung von Beispielen ist jedoch nicht abschließend zu verstehen.

Allgemein sind unter einer relevanten Fahrsituation Fahrsituationen zu verstehen, bei welchen mit einer Abweichung zwischen einem tatsächlichen Fahrverhalten des Kraftwagens und einem von einem Fahrer vorgegebenen bzw. gewünschten Fahrverhalten zu rechnen ist, wobei im Extremfall ein Grenzbereich des Kraftwagens überschritten wird und somit mit einem Kontrollverlust eines Fahrers über den Kraftwagen zu rechnen ist. Ferner ist unter einer relevanten Fahrsituation jede Fahrsituation zu verstehen, in der ein für den Fahrer auflösbares unterschiedliches Fahrverhalten zwischen einem Achs- und Allradbetrieb besteht. Dies beinhaltet nicht nur fahrsicherheitsrelevante, sondern auch fahrdynamik- und komfortrelevante Fahrsituationen.

Es ist erfindungsgemäß vorgesehen, den Allradantrieb des Kraftwagens, also die bislang noch nicht angetriebene Sekundärachse des Kraftwagens, zuzuschalten, noch bevor eine solche relevante Fahrsituation eintritt, so dass durch Zuschalten des Allradantriebes eine zusätzliche Verbesserung der Fahrdynamik des Kraftwagens erzielt werden kann, noch bevor es zu der eigentlich relevanten Fahrsituation kommen kann. Eine bei einem reinen Zweiradantrieb noch als relevant einzuschätzende Fahrsituation kann somit nach Zuschalten des Allradantriebes eine nicht mehr relevante Fahrsituation sein, da aufgrund der zusätzlich angetriebenen Räder der Sekundärachse eine verbesserte Fahrdynamik des Kraftwagens erzielt werden kann.

Insbesondere wird der Allradantrieb des Kraftwagens so rechtzeitig zugeschaltet, dass noch vor einem Eingreifen von Fahrdynamikregelsystemen, beispielsweise einer elektronischen Stabilitätskontrolle, einer Traktionskontrolle und dergleichen, das Fahrverhalten des Kraftwagens derart verbessert wird, dass gegebenenfalls gar kein Eingriff oder ein wesentlich verminderter Eingriff einer Fahrdynamikregelung erforderlich wird. Durch das vorausschauende Zuschalten des Allradantriebes des Kraftwagens im Bedarfsfall kann ein verbessertes Fahrverhalten des Kraftwagens mit entsprechend erhöhten Sicherheitsreserven erzielt werden.

Zudem wird dadurch, dass der Allradantrieb nur dann zugeschaltet wird, wenn dieser wirklich erforderlich wird, eine entsprechende Kraftstoffersparnis ermöglicht. Ferner kann durch das rechtzeitige Zuschalten des Allradantriebes eine entsprechende Synchronisation des Antriebsstrangs, beispielsweise eine Synchronisation auf Raddrehzahlniveau und Schließen einer Klauenkupplung, komfortabel und kaum spürbar erfolgen. Mittels des erfindungsgemäßen Verfahrens, bei welchem es sich um eine Betriebsstrategie handelt, ist nicht erst eine Regeldifferenz, beispielsweise in Form von durchdrehenden Vorderrädern bei einer Volllastbeschleunigung oder einer sehr zügigen Kurvenfahrt, zur Zuschaltung einer Hinterachse bzw. einer zuschaltbaren Sekundärachse nötig. Es lässt sich also eine nennenswerte Kraftstoffersparnis erzielen, ohne dabei zu große Traktions- oder Fahrdynamikeinbußen in Kauf nehmen zu müssen.

Gemäß einem ersten Aspekt der Erfindung ist es vorgesehen, dass mittels Umfeldsensoren des Kraftwagens und/oder einer Navigationseinrichtung des Kraftwagens ein in Fahrtrichtung vor dem Kraftwagen liegender Fahrbahnabschnitt erfasst und überprüft wird, ob der Fahrbahnabschnitt eine Kurve aufweist, welche einen vorgegebenen Kurvenradius unterschreitet, und, falls dies der Fall ist, vor dem Durchfahren des Fahrbahnabschnittes der Allradantrieb zugeschaltet wird bevor es zu einer relevanten Fahrsituation kommen kann. Es können somit also vorausschauend insbesondere enge Kurven erkannt werden, so dass unter Berücksichtigung dieser Informationen eine vorausschauende, also prädiktive, Zuschaltung des Allradantriebes erfolgen kann, bevor es zu einer relevanten Fahrsituation, beispielsweise in Form von unerwünschten Traktionsverlusten, einem Untersteuern oder Übersteuern kommen kann. Beispielsweise wird der Allradantrieb so rechtzeitig zugeschaltet, dass der Kraftwagen sicher und schnell aus einer zuvor erkannten Kurve wieder heraus beschleunigt werden kann, ohne dass es zu einem instabilen Fahrverhalten des Kraftwagens, beispielsweise in Form eines Unteroder Übersteuerns, kommt. Ferner kann ein rechtzeitiges Zuschalten des Allradantriebes auch vor Durchfahren der Kurve sinnvoll sein, da bei einem plötzlichen Lupfen des Gaspedals, also einem schnellen Wechsel von einem Zug- in einen Schleppbetrieb des Kraftwagens, es vorteilhafter sein kann, wenn der Kraftwagen bereits im Allradantrieb betrieben wird und nicht nur die Primärachse angetrieben wird.

Gemäß einem zweiten Aspekt der Erfindung ist es vorgesehen, dass von einem oder mehreren Fahrerassistenzsystemen des Kraftwagens, mittels welchen ein teilautonomer oder autonomer Betrieb des Kraftwagens ermöglicht wird, eine zukünftige Beschleunigung und/oder ein zukünftiger Sollradius des Kraftwagens bereitgestellt und unter Berücksichtigung dieser Größen abgeschätzt wird, ob eine relevante Fahrsituation bevorsteht, und in diesem Fall der Allradantrieb vor Eintreten der relevanten Situation zugeschaltet wird. Es werden also Fahrerassistenzsysteme des Kraftwagens genutzt, mittels welchen ein teilautonomer oder autonomer Betrieb des Kraftwagens, beispielsweise in Form eines Abstandsregeltempomaten, eines Spurhalterassistenten oder dergleichen, ermöglicht wird, um zukünftige Trajektorien, Beschleunigungen und Geschwindigkeiten bereitzustellen und basierend auf diesen Informationen eine vorausschauende Abschätzung treffen zu können, ob mit einer relevanten Fahrsituation zu rechnen ist, so dass ein rechtzeitiges Zuschalten des Allradantriebes zu einer Verbesserung der Fahrdynamik durchgeführt und somit zu einem sichereren Fahrverhalten des Kraftwagens beigetragen wird.

In vorteilhafter Ausgestaltung der Erfindung ist es vorgesehen, dass zum Abschätzen, ob eine relevante Fahrsituation bevorsteht, überprüft wird, ob ein an einer permanent angetriebenen Primärachse des Kraftwagens aufbringbares Moment größer als ein maximal an der Primärachse auf die Fahrbahn übertragbares Moment ist und, falls dies zutrifft, abgeschätzt wird, ob ein Fahrer einen so großen Anteil des abrufbaren Moments abrufen wird, dass dieser Anteil größer als das übertragbare Moment ist, und falls dies zutrifft, der Allradantrieb zugeschaltet wird. Vorzugsweise wird das maximal an der Primärachse auf die Fahrbahn übertragbare Moment dabei anhand eines Reibbeiwertes, einer jeweiligen auf die Räder der Primärachse einwirkenden Radlast und jeweiligen auf die Räder der Primärachse einwirkenden Seitenkraft ermittelt. Vorzugsweise werden zur Ermittlung des Reibbeiwertes sowohl Informationen über die unmittelbare als auch über die in Fahrtrichtung noch vor dem Kraftwagen gegebene Fahrbahnbeschaffenheit und auch Informationen über die Reifen des Kraftwagens mit einbezogen. Mit anderen Worten wird als relevante Fahrsituation in diesem Fall abgeschätzt, ob mit einem Durchdrehen von einem oder beiden der Räder der angetriebenen Primärachse zu rechnen ist, indem zum einen überprüft wird, ob das potentiell abrufbare Moment an der Primärachse das auf die Fahrbahn übertragbare Moment übersteigt, wobei anschließend noch abgeschätzt wird, ob das abrufbare Moment von einem jeweiligen Fahrertyp abgerufen werden wird. Es erfolgt also eine vorausschauende Abschätzung, ob mit einem Traktionsverlust an der Primärachse zu rechnen ist, wobei, falls dies der Fall sein sollte, der Allradantrieb bzw. die bislang nicht angetriebene Sekundärachse zur rechtzeitigen Traktionsverbesserung des Kraftwagens zugeschaltet wird. Dadurch wird also vorausschauend und rechtzeitig sichergestellt, dass, bevor es überhaupt zu einem Durchdrehen der Räder der angetriebenen Primärachse kommen kann, rechtzeitig die Sekundärachse zugeschaltet wird, wodurch eine verbesserte Traktion des Kraftwagens ermöglicht wird.

Eine weitere vorteilhafte Ausführungsform der Erfindung sieht vor, dass anhand einer Querbeschleunigung, Sollgierrate und/oder Geschwindigkeit des Kraftwagens in Kombination mit einer Abschätzung des Fahrverhaltens des Fahrers überprüft wird, ob mit einer relevanten Fahrsituation zu rechnen ist, und falls dies zutrifft, der Allradantrieb zugeschaltet wird. Mit anderen Worten handelt es sich hier nicht um eine Traktionsvorsteuerung, wie zuvor erläutert, sondern um eine Agilitätsvorsteuerung, mittels welcher insbesondere die Eigenschaften des Kraftwagens im Hinblick auf seine Querdynamik durch rechtzeitiges Zuschalten eines Allradantriebes verbessert werden kann. Anhand der Querbeschleunigung, der Sollgierrate und/oder der Geschwindigkeit des Kraftwagens erfolgt eine Fahrsituationsbewertung und auch eine Extrapolation der zukünftigen Fahrsituation, wobei gleichzeitig fahrertypabhängig abgeschätzt wird, welches Fahrverhalten er an den Tag legen wird, so dass rechtzeitig relevante Fahrsituationen, beispielsweise in Form eines Untersteuerns, eines Übersteuerns oder gegebenenfalls weitere unerwünschte Fahrsituationen des Kraftwagens abgeschätzt werden können, welche sich bei einem reinen Zweiradantrieb ergeben würden, so dass rechtzeitig der Allradantrieb zugeschaltet wird, um diese relevante Fahrsituation zu vermeiden.

Gemäß einer weiteren vorteilhaften Ausführungsform der Erfindung ist es vorgesehen, dass die Abschätzung des Fahrverhaltens des Fahrers unter Berücksichtigung eines aktivierten, die Fahrdynamik des Kraftwagens beeinflussenden Betriebsmodus des Kraftwagens erfolgt. Der Kraftwagen kann beispielsweise ein Fahrdynamiksystem aufweise, mittels welchem ein Fahrer die Charakteristik jeweiliger Komponenten des Kraftwagens, beispielsweise von Motor, Getriebe, Lenkung, Dämpfung, Differenzialgetrieben und dergleichen, an seine persönlichen Vorlieben anpassen kann. Dabei kann es vorgesehen sein, dass unterschiedliche, die Fahrdynamik des Kraftwagens beeinflussende Betriebsmodi vorwählbar sind, beispielsweise in Form von einer besonders komfortablen Abstimmung, einer besonders sportlichen Abstimmung oder auch einem Automatikmodus, welche bedarfsgerecht beispielsweise die genannten Komponenten des Kraftwagens entsprechend der Fahrweise des Fahrers einstellt. Je nach vorgewähltem Betriebsmodus wird also bei der Abschätzung des Fahrverhaltens des Kraftfahrers ein Zusammenhang zwischen gewähltem Betriebsmodus und Fahrverhalten des Fahrers angenommen, gemäß welchem das Fahrverhalten des Fahrers abgeschätzt wird.

In weiterer vorteilhafter Ausgestaltung der Erfindung ist es vorgesehen, dass das abgeschätzte Fahrverhalten des Fahrers und das tatsächliche Fahrverhalten des Fahrers fortlaufend verglichen und zur Abschätzung des Fahrverhaltens des Fahrers herangezogen wird. Mit anderen Worten ist also ein fortlaufend lernendes System vorgesehen, welches das fahrsituationsabhängig angenommene Fahrverhalten des Fahrers und das anschließend tatsächlich an den Tag gelegte Fahrverhalten des Fahrers fortlaufend vergleicht, um zukünftige Vorhersagen von Fahrverhalten besser und somit akkurater abschätzen zu können. Dafür können beispielsweise das Fahrverhalten des Fahrers charakterisierende Größen, wie beispielsweise ein abgerufenes Motormoment, Giergeschwindigkeiten, Fahrzeuggeschwindigkeiten und dergleichen herangezogen werden, wobei jeweils die tatsächlich gemessenen Größen und die zuvor vorhergesagten Größen ins Verhältnis gesetzt und über der Zeit aufintegriert werden, um eine fortlaufend verbesserte Anpassung der Vorhersage des Fahrverhaltens erzielen zu können. Insbesondere ist es auch möglich, dass unterschiedliche Fahrerprofile, beispielsweise durch eine entsprechende Erkennung unterschiedlicher Fahrer anhand ihrer jeweiligen individuell verwendeten Fahrzeugschlüssel oder dergleichen, anzulegen und für die unterschiedlichen Fahrerprofile eine kontinuierliche Verbesserung der Abschätzung des Fahrverhaltens durchzuführen.

In bevorzugter Ausgestaltung der Erfindung ist es vorgesehen, dass ermittelt wird, ob ein in Abhängigkeit von dem aktivierten, die Fahrdynamik des Kraftwagens beeinflussenden Betriebsmodus vorgegebener Schwellwert für einen Schlupf an einem der Räder der permanent angetriebenen Primärachse des Kraftwagens überschritten wird, und falls dies zutrifft, der Allradantrieb zugeschaltet wird. Mit anderen Worten handelt es sich hierbei also nicht um eine Traktionsvorsteuerung, sondern um eine Traktionsregelung, mittels welcher der Allradantrieb zugeschaltet wird, falls es doch zu einer relevanten Fahrsituation in Form eines unerwünschten Schlupfes an einem der Räder der permanent angetriebenen Primärachse des Kraftwagens kommen sollte. Der Schwellwert für den zulässigen Schlupf an einem oder allen Rädern der permanent angetriebenen Primärachse des Kraftwagens wird dabei in Abhängigkeit von dem aktivierten, die Fahrdynamik des Kraftwagens beeinflussenden Betriebsmodus vorgegeben, da es je nach gewähltem Betriebsmodus gegebenenfalls sogar wünschenswert sein kann, dass ein gewisser Schlupf an einem der Räder bzw. an allen Rädern erlaubt wird, um beispielsweise ein leichtes Driften des Kraftwagens in einem Sportmodus zuzulassen. Diese Traktionsregelung bringt den Vorteil mit sich, dass, falls durch die Traktionsvorsteuerung kein rechtzeitiges Einschalten des Allradantriebes, beispielsweise aufgrund einer fehlerhaften Abschätzung des zukünftigen Fahrverhaltens des Kraftfahrers erfolgt ist, noch eine Art Rückfalllösung vorhanden ist, um durch Zuschalten des Allradantriebes eine Verbesserung der Fahrdynamik des Kraftwagens erzielen zu können.

Eine weitere vorteilhafte Ausführungsform der Erfindung sieht vor, dass ermittelt wird, ob ein jeweiliger, in Abhängigkeit von dem aktivierten, die Fahrdynamik des Kraftwagens beeinflussenden Betriebsmodus vorgegebener Schwellwert für ein Übersteuern und Untersteuern des Kraftwagens überschritten wird, und, falls dies zutrifft, der Allradantrieb zugeschaltet wird. Vor allem im Hinblick auf die Querdynamik des Kraftwagens handelt es sich hierbei um eine Fahrdynamikregelung, welche in einem solchen Fall eingreift, in dem eine relevante Fahrsituation in Form eines unerwünschten Übersteuerns oder Untersteuerns des Kraftwagens erkannt worden ist. Sollte also bei der prädiktiven Fahrdynamikvorsteuerung, beispielsweise aufgrund einer fehlerhaften Abschätzung des Fahrverhaltens des Kraftfahrers, kein Allradantrieb zugeschaltet worden sein, infolge dessen es zu einem ungewünschten Übersteuern oder Untersteuern des Kraftwagens gekommen ist, wird dies im Wesentlichen unmittelbar erkannt, so dass durch Zuschalten des Allradantriebes das unerwünschte Übersteuern oder Untersteuern aufgrund der entsprechend verbesserten Fahrdynamik des Kraftwagens durch die zusätzlich ansteuerbaren Räder der zugeschalteten Sekundärachse besonders schnell behoben bzw. unterbunden werden kann.

Gemäß einer weiteren vorteilhaften Ausführungsform der Erfindung ist es vorgesehen, dass, nachdem der Allradantrieb zugeschaltet worden ist, anhand der zumindest einen Größe und/oder weiterer die Bewegung des Kraftwagens quantifizierenden und/oder beeinflussenden Größen ermittelt wird, ob ein Abschalten des Allradantriebes zu einer relevanten Fahrsituation führen würde, und falls dies nicht der Fall ist, der Allradantrieb nach einer vorgegebenen Haltezeit abgeschaltet wird. Vorzugsweise wird quasi permanent überprüft, ob ein vollständiges Abschalten des Allradantriebes, also ein alleiniger Antrieb der permanent angetriebenen Primärachse, zu einer relevanten Fahrsituation führen würde. Falls dies nicht der Fall sein sollte, wird der Allradantrieb nach der definierten Haltezeit wieder abgeschaltet, so dass durch die bedarfsgerechte Nutzung des Allradantriebes ein besonders energieeffizienter Betrieb des Kraftwagens ermöglicht wird.

Eine weitere vorteilhafte Ausführungsform der Erfindung sieht vor, dass die Haltezeit in Abhängigkeit von dem jeweils aktivierten, die Fahrdynamik des Kraftwagens beeinflussenden Betriebsmodus und/oder von dem abgeschätzten Fahrverhalten des Fahrers vorgegeben wird. Mit anderen Worten wird also ein zeitlich begrenztes Abschaltverbot vorgegeben, so dass nach einem Zuschalten des Allradantriebes dieser nicht unmittelbar, sondern erst nach Ablauf der vorgegebenen Zeit des Abschaltverbotes wieder abgeschaltet werden kann. Dadurch wird insbesondere ein unerwünschtes und andauerndes Hinzuschalten und Wegschalten der Sekundärachse, also des Allradantriebes, vermieden. Des Weiteren können durch eine entsprechende Dauer des Abschaltverbotes gewisse Sicherheitsreserven sichergestellt werden, insbesondere, wenn von einem besonders sportlichen Fahrverhalten des Kraftfahrers ausgegangen wird, so dass ein hinreichend langer Allradbetrieb des Kraftwagens dazu beiträgt, eine vor Zuschalten des Allradantriebs als relevante, beispielsweise kritische Fahrsituation eingeschätzte Situation, sicher durchfahren zu können.

In weiterer vorteilhafter Ausgestaltung der Erfindung ist es vorgesehen, dass mittels einer Erfassungseinrichtung des Kraftwagens, insbesondere mittels eines Mehrebenenlaserscanners, der unterhalb und/oder vor dem Kraftwagen liegende Fahrbahnabschnitt überwacht und basierend darauf ein Reibbeiwert des unterhalb und/oder vor dem Kraftwagen liegenden Fahrbahnabschnitts ermittelt wird. Dadurch lassen sich Reibwertänderungen, beispielweise durch einen Wechsel von einer eisfreien auf eine mit Eis belegte Fahrbahn und dergleichen, vorausschauend erkennen, so dass unter Berücksichtigung dieser Informationen ein frühzeitiges bzw. rechtzeitiges Zuschalten des Allradantriebes zur Verbesserung des Fahrverhaltens des Kraftwagens erfolgen kann.

Ein erfindungsgemäßes System zum Betreiben eines Antriebsstrangs eines Kraftwagens umfasst eine Erfassungseinrichtung, welche dazu ausgelegt ist, zumindest eine eine Bewegung des Kraftwagens quantifizierende und/oder beeinflussende Größe zu erfassen sowie eine Steuereinrichtung, welche dazu ausgelegt ist, einen Allradantrieb des Kraftwagens in Abhängigkeit von der Größe zuzuschalten, wobei sich das erfindungsgemäße System dadurch auszeichnet, dass die Steuereinrichtung dazu ausgelegt ist, basierend auf der zumindest einen Größe abzuschätzen, ob eine relevante Fahrsituation bevorsteht, und nur in diesem Fall den Allradantrieb vor Eintreten der relevanten Situation zuzuschalten. Gemäß einem ersten Aspekt der Erfindung ist die Steuereinrichtung dazu ausgelegt, vor dem Durchfahren eines Fahrbahnabschnittes bevor es zu einer relevanten Fahrsituation kommen kann den Allradantrieb zuzuschalten, falls mittels Umfeldsensoren des Kraftwagens und/oder einer Navigationseinrichtung des Kraftwagens der in Fahrtrichtung vor dem Kraftwagen liegende Fahrbahnabschnitt erfasst und ermittelt wird, dass der Fahrbahnabschnitt eine Kurve aufweist, welche einen vorgegebenen Kurvenradius unterschreitet. Gemäß einem zweiten Aspekt der Erfindung ist die Steuereinrichtung dazu ausgelegt, unter Berücksichtigung von einer durch ein oder mehrere Fahrerassistenzsystemen des Kraftwagens, mittels welchen ein teilautonomer oder autonomer Betrieb des Kraftwagens ermöglicht wird, bereitgestellten zukünftigen Beschleunigung und/oder von einem bereitgestellten zukünftigen Sollradius des Kraftwagens abzuschätzen, ob eine relevante Fahrsituation bevorsteht, und in diesem Fall den Allradantrieb vor Eintreten der relevanten Situation zuzuschalten. Vorteilhafte Ausgestaltungen des erfindungsgemäßen Verfahrens sind als vorteilhafte Ausgestaltungen des Systems anzusehen, wobei hier insbesondere das System Mittel umfasst, mit denen die Verfahrensschritte durchführbar sind.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Die Zeichnung zeigt in:
- Fig. 1: eine schematische Darstellung eines Kraftwagens mit einer Erfassungseinrichtung, welche dazu ausgelegt ist, eine eine Bewegung des Kraftwagens quantifizierende und/oder beeinflussende Größe zu erfassen und einer Steuereinrichtung, welche dazu ausgelegt ist, einen Allradantrieb des Kraftwagens in Abhängigkeit von der Größe zuzuschalten;
- Fig. 2: einen Signalflussgraphen, mittels welchem eine Traktionsvorsteuerung zum Betreiben eines Antriebsstrangs eines Kraftwagens gezeigt ist;
- Fig. 3: einen Signalflussgraphen, anhand welchem eine Traktionsregelung zum Betreiben eines Antriebsstrangs eines Kraftwagens gezeigt ist;
- Fig. 4: einen Signalflussgraphen, anhand welchem eine Fahrdynamikvorsteuerung zum Betreiben eines Antriebsstrangs eines Kraftwagens gezeigt ist; und in
- Fig. 5: einen weiteren Signalflussgraphen, anhand welchem eine Fahrdynamikregelung zum Betreiben eines Antriebsstrangs eines Kraftwagens gezeigt ist.

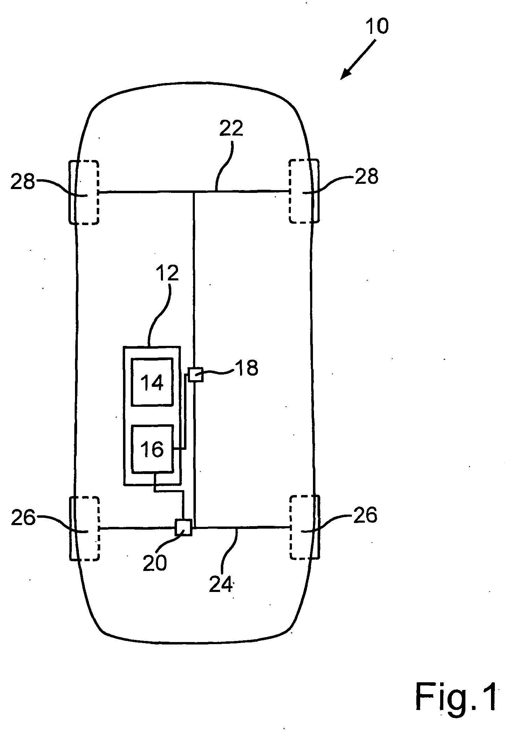

Ein Kraftwagen 10 mit einem System 12 zum Betreiben eines nicht näher bezeichneten Antriebsstrangs des Kraftwagens 10 ist in einer schematischen Ansicht in Fig. 1 gezeigt. Das System 12 umfasst eine Erfassungseinrichtung 14, welche dazu ausgelegt ist, zumindest eine eine Bewegung des Kraftwagens 10 quantifizierende und/oder beeinflussende Größe zu erfassen. Des Weiteren umfasst das System 12 eine Steuereinrichtung 16, welche dazu ausgelegt ist, einen Allradantrieb des Kraftwagens 10 in Abhängigkeit von der Größe zu- und abzuschalten. Die Steuereinrichtung 16 ist mit zwei Kupplungen 18, 20 gekoppelt, so dass mittels der Steuereinrichtung 16 die Kupplungen 18, 20 geöffnet bzw. geschlossen werden können, um einen Allradantrieb zu- bzw. abzuschalten.

Vorliegend ist eine permanent angetriebene Primärachse 22 die Vorderachse des Kraftwagens 10 und eine zuschaltbare Sekundärachse 24 die Hinterachse des Kraftwagens 10. Es ist aber genauso gut möglich, dass es sich bei dem Kraftwagen 10 um einen solchen Kraftwagen handelt, dessen Primärachse die Hinterachse ist, wobei die Vorderachse für einen Allradantrieb zuschaltbar ist.

Bei der Kupplung 18 handelt es sich vorliegend um eine Lamellenkupplung, mittels welcher die Sekundärachse 24 zugeschaltet und ein Momentenfluss von einem hier nicht dargestellten Motor zwischen Primärachse 22 und Sekundärachse 24 variabel eingestellt werden kann. Bei der Kupplung 20 handelt es sich im vorliegenden. Fall um eine Klauenkupplung, welche dazu dient, ein an der lediglich im Allradbetrieb angetriebenen Sekundärachse 24 vorgesehenes, hier nicht dargestelltes Achsgetriebe von einem Kraftfluss zwischen den zwei Hinterrädern 26 zu trennen. Dadurch können bei einem reinen Zweiradantrieb der Primärachse 22 entsprechende Reibungs- und Planschverluste im Achsgetriebe sowie beim Beschleunigen zusätzliche, zu beschleunigende Massen, beispielsweise ein Tellerrad des Achsgetriebes, vermieden bzw. reduziert werden. Mit anderen Worten erfolgt also eine temporäre Entkopplung eines hinteren Teilantriebsstranges, um so Verluste durch eine stillstehende Kardanwelle samt Hinterachsdifferenzial zu reduzieren. Dies wird getriebeabtriebsseitig mittels der als Lamellenkupplung ausgebildeten Kupplung 18 und an der Radseite (der Sekundärachse 24) mit der als Klauenkupplung ausgebildeten Kupplung 20 umgesetzt.

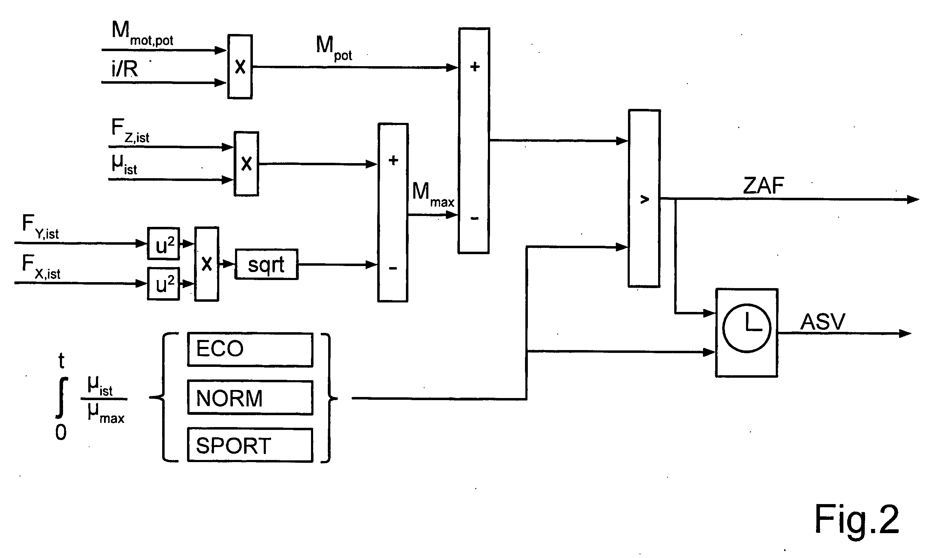

Nachfolgend wird anhand der Fig. 2 bis 5 ein Verfahren zum Betreiben des Antriebsstrangs des Kraftwagens 10 erläutert. In Fig. 2 ist ein Signalflussgraph zur Traktionsvorsteuerung gezeigt. Die Traktionsvorsteuerung dient dazu, vorausschauend abzuschätzen, ob bei einem reinen Zvireiradbetrieb des Kraftwagens 10 mit einen Durchdrehen von einem oder beiden Vorderräder 28 zu rechnen ist. Zum einen wird ein potentielles Motormoment M_{mot,pot} erfasst und unter Berücksichtigung einer entsprechenden Übersetzung i und einem Radius R der Vorderreifen 28 miteinander multipliziert, um ein an der permanent angetriebenen Primärachse 22 des Kraftwagens 10 aufbringbares Moment Mₚₒₜ zu ermitteln. Des Weiteren wird eine aktuelle Radlast F_{z,ist} mit einem aktuellen Reibbeiwert µᵢₛₜ multipliziert. Ferner werden auf die jeweiligen Räder 28 einwirkende Seitenkräfte F_{y,ist} und Längskräfte F_{x,ist} miteinander verrechnet. Basierend auf diesen Größen wird ein maximal an der Primärachse 22 auf die Fahrbahn übertragbares Moment Mₘₐₓ ermittelt und mit dem zuvor ermittelten an der Primärachse 22 aufbringbaren Moment Mₚₒₜ verglichen. Sollte das aufbringbare Moment Mₚₒₜ größer sein als das maximal an der Primärachse 22 auf die Fahrbahn übertragbare Moment Mₘₐₓ, so wird abgeschätzt, ob ein Fahrer einen so großen Anteil des abrufbaren Moments Mₚₒₜ abrufen wird, dass dieser Anteil größer als das übertragbare Moment Mₘₐₓ ist, und falls dies zutrifft, erfolgt eine Zuschaltanforderung ZAF.

Zur Abschätzung des Fahrverhaltens des Fahrers kann dieser unterschiedlichen Fahrertypen ECO, NORM, SPORT zugeordnet sein, wobei basierend auf der unterschiedlichen Zuordnung des Fahrers zu den Fahrertypen von einem eher ökonomischen, einem normalen oder einem sportlichen Fahrverhalten ausgegangen wird. Beispielsweise kann die Zuordnung des Fahrers zu den jeweiligen Fahrertypen basierend auf seinem aktuellen Fahrverhalten oder auch basierend auf einem fortlaufend verfeinerten Profil des Fahrers erfolgen.

Eine fortlaufende Verfeinerung der Vorhersage des Fahrverhaltens des Fahrers wird vorliegend dadurch erzielt, dass eine Reibwertausnutzung durch den Fahrer fortlaufend analysiert wird. Dafür wird ein jeweils aktueller Reibbeiwert µᵢₛₜ zu einem maximal durch den Fahrer ausgenutzten Reibbeiwert µₘₐₓ ins Verhältnis gesetzt und über der Zeit integriert. Dadurch wird sowohl das längsdynamische als auch das querdynamische Fahrverhalten des Fahrers fortlaufend überwacht. Beispielsweise kann dadurch erfasst werden, wie sehr ein Fahrer üblicherweise bei Kurvenfahrten an den Grenzbereich des Fahrzeugs herangeht, wie stark er das Fahrzeug beschleunigt, usw. Basierend auf diesem Integral erfolgt zudem die Zuordnung des Fahrers in die unterschiedlichen Fahrertypen ECO, NORM, SPORT.

Ferner kann die Abschätzung des Fahrverhaltens des Fahrers auch unter Berücksichtigung eines aktivierten, die Fahrdynamik des Kraftwagens beeinflussenden Betriebsmodus des Kraftwagens erfolgen. Der Kraftwagen 10 kann beispielsweise ein Fahrdynamiksystem aufweisen, bei welchem der Fahrer die Charakteristik entsprechender Komponenten des Kraftwagens 10, beispielsweise die Motorcharakteristik, die Getriebecharakteristik, die Lenkungscharakteristik, die Dämpfungscharakteristik und dergleichen, durch Vorwahl eines entsprechenden Betriebsmodus anpassen kann.

Je nach Auswahl des Betriebsmodus des Fahrdynamiksystems wird ein unterschiedliches Fahrverhalten des Fahrers angenommen. Zusätzlich kann das Fahrverhalten des Fahrers auch in Abhängigkeit von dem eingestellten die Fahrdynamik des Kraftwagens beeinflussenden Betriebsmodus des Kraftwagens und seinem aktuellen Fahrverhalten und/oder einem Fahrerprofil abgeschätzt werden.

Nachdem die Zuschaltanforderung ZAF generiert worden ist, steuert die Steuereinrichtung 16 die Kupplungen 18 und 20 derart an, dass die Sekundärachse 24 zugeschaltet und somit ein Allradbetrieb des Kraftwagens 10 ermöglicht wird. Nachdem der Allradantrieb zugeschaltet worden ist, wird anhand der zumindest einen Größe und weiterer die Bewegung des Kraftwagens quantifizierenden und/oder beeinflussenden Größen ermittelt, ob ein Abschalten des Allradantriebs zu einer relevanten Fahrsituation, beispielsweise einem unerwünschten Übersteuern, Untersteuern und dergleichen, führen würde, und falls dies nicht der Fall ist, wird der Allradantrieb nach einer vorgegebenen Haltezeit in Form eines Abschaltverbotes ASV abgeschaltet. Die Haltezeit ASV wird dabei in Abhängigkeit von dem jeweils aktivierten, die Fahrdynamik des Kraftwagens beeinflussenden Betriebsmodus und/oder von dem abgeschätzten Fahrverhalten des Fahrers vorgegeben. Es wird also eine entsprechende Abschaltverzögerung vorgegeben, so dass verhindert wird, dass unmittelbar oder nach einer besonders kurzen Zeitdauer der zuvor zugeschaltete Allradantrieb wieder abgeschaltet wird.

Die anhand von Fig. 2 erläuterte Traktionsvorsteuerung dient also dazu, rechtzeitig einen Allradantrieb des Kraftwagens 10 zuzuschalten, bevor es zu einem Traktionsverlust der Räder 28 an der Primärachse 22 kommen kann.

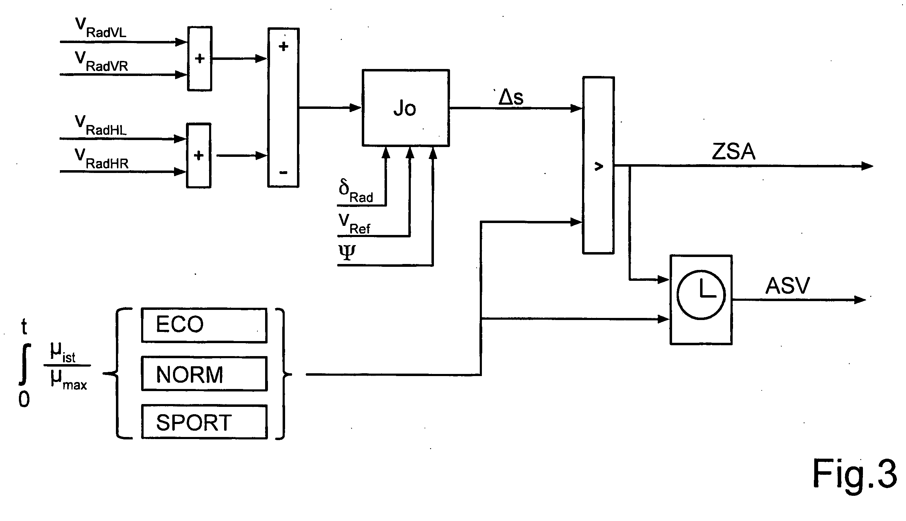

In Fig. 3 ist ein weiterer Signalflussgraph gezeigt, anhand welchem eine Traktionsregelung erläutert ist. Es werden Raddrehzahlen des linken Vorderrades V_{RadVL}, des rechten Vorderrades V_{RadVR}, des linken Hinterrades V_{RadHL} und des rechten Hinterrades V_{RadHR} erfasst und einem Fahrzeugmodell 30 zugeführt. Ferner werden dem Fahrzeugmodell 30 eine Referenzgeschwindigkeit V_{Ref}, eine Giergeschwindigkeit *ψ̇*. und eine Raddrehzahldifferenz δ_{Rad} zugeführt. Basierend auf diesen Größen wird ein entsprechender korrigierter Schlupf Δs zwischen den Rädern 26, 28 ermittelt. Des Weiteren wird in Abhängigkeit von dem gerade aktivierten, die Fahrdynamik des Kraftwagens beeinflussenden Betriebsmodus ein nicht näher bezeichneter Schwellwert für einen zusätzlichen Schlupf an einem bzw. zwischen den Rädern 26, 28 vorgegeben und mit dem ermittelten Schlupf Δs verglichen. Falls der ermittelte Schlupf Δs den vorgegebenen Schwellwert unterschreiten sollte, wird der Allradantrieb zugeschaltet. Die hier erläuterte Traktionsregelung greift also genau in solchen Fällen ein, wenn die anhand von Fig. 2 erläuterte Traktionsvorsteuerung nicht in wünschenswerter Weise dazu beigetragen hat, den Allradantrieb rechzeitig zuzuschalten, um einen entsprechend unerwünschten Schlupf zu verhindern. Beispielsweise kann dies dadurch erfolgen, dass im Rahmen der Traktionsvorsteuerung das Fahrverhalten des Fahrers nur unzureichend abgeschätzt worden ist, so dass fälschlicherweise mit einer nicht relevanten Situation oder nicht mit einer solchen Situation gerechnet worden ist, dass es zu einem Schlupf an einem der Räder, insbesondere an der Primärachse 22, kommen könnte. Die anhand von Fig. 3 erläuterte Traktionsregelung dient dann dazu, den bereits aufgetretenen Schlupf an der Primärachse dadurch zu verhindern bzw. einzudämmen, dass, nachdem der Schlupf bereits aufgetreten ist, die Sekundärachse 24, also ein Allradantrieb, zugeschaltet wird.

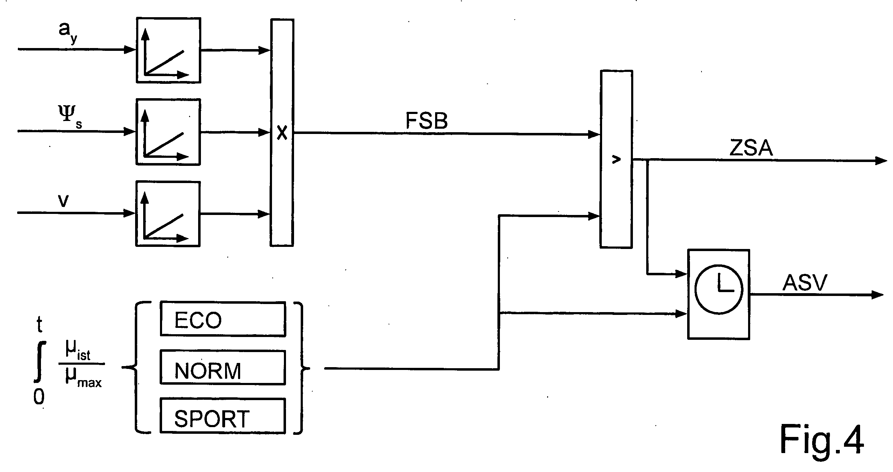

In Fig. 4 ist ein Signalflussgraph zur Erläuterung einer Fahrdynamikvorsteuerung zum Betreiben des Antriebsstrangs des Kraftwagens 10 gezeigt. Die Fahrdynamikvorsteuerung dient dazu, vorausschauend insbesondere im Hinblick auf querdynamisch relevante Fahrsituationen so rechtzeitig den Allradantrieb des Kraftwagens 10 zuzuschalten, dass beispielsweise kein Untersteuern oder Übersteuern des Kraftwagens 10 auftritt. Anhand einer Querbeschleunigung a_{y}, einer Sollgierrate *ψ̇ₛ* und einer Geschwindigkeit v des Kraftwagens 10 erfolgt zunächst eine Fahrsituationsbewertung FSB. Parallel dazu erfolgt eine Bewertung des Fahrertyps und eine Einordung in einen Fahrertypklasse (z.B. ECO, NORM, Sport). Anhand dieser Einschätzung und der aktuellen Fahrsituation wird überprüft, ob mit einer relevanten Fahrsituation zu rechnen ist, und falls dies zutrifft, wird wiederum eine Zuschaltanforderung ZSA generiert, infolgedessen die Steuereinrichtung 16 den Allradantrieb zuschaltet.

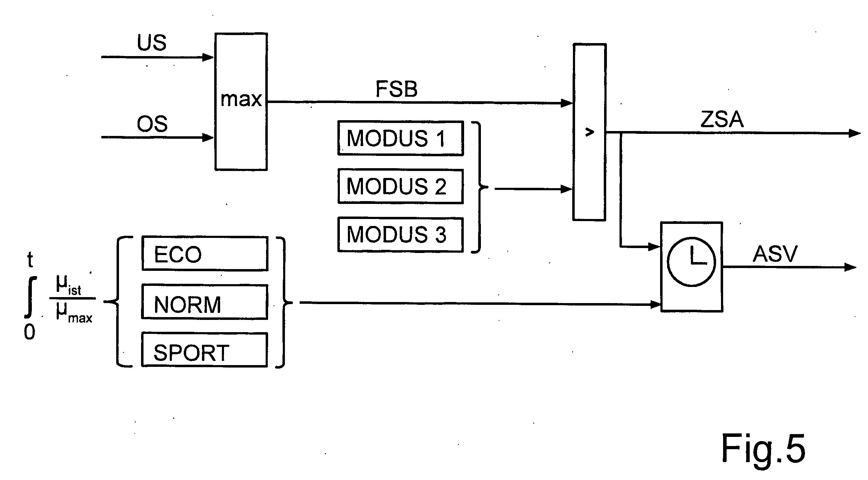

In Fig. 5 ist anhand eines weiteren Signalflussgraphen eine Fahrdynamikregelung gezeigt, welche in solchen Fällen eingreift, wenn aufgrund der Fahrdynamikvorsteuerung gemäß Fig. 4 kein rechtzeitiges Zuschalten des Allradantriebs erfolgt ist. Es wird zunächst ein Untersteuern US oder ein Übersteuern OS des Kraftwagens ermittelt und basierend darauf eine Fahrsituationsbewertung FSB vorgenommen. In Abhängigkeit von einem durch den Fahrer auswählbarem und aktivierten, die Fahrdynamik des Kraftwagens beeinflussenden Betriebsmodus MODUS 1, MODUS 2, MODUS 3, welche beispielsweise einem komfortablen, ausgewogenen, sportlichen oder effizienten Betriebsmodus entsprechen können, wird ein entsprechender Schwellwert für ein Übersteuern und Untersteuern des Kraftwagens festgelegt, wonach dieser Schwellwert mit den ermittelten Werten für das Übersteuern US bzw. das Untersteuern OS verglichen wird. Sollte das tatsächliche Übersteuern US oder das Untersteuern OS den vorgegebenen Grenzwert überschreiten, erfolgt wiederum eine Zuschaltanforderung ZSA, infolge dessen die Steuereinrichtung 16 wiederum den Allradantrieb zuschaltet. In Abhängigkeit des abgeschätzten Fahrtyps ECO, NORM, SPORT, wird wiederum eine Haltezeit in Form des Abschaltverbotes ASV vorgegeben, die erst überschritten werden sein muss, bevor überhaupt der Allradantrieb wieder abgeschaltet werden kann.

Insbesondere zur Unterstützung der in den Fig. 2 und 4 gezeigten Traktionsvorsteuerung bzw. Fahrdynamikvorsteuerung können Umfeldsensoren des Kraftwagens und eine Navigationseinrichtung des Kraftwagens 10 in Fahrtrichtung vor dem Kraftwagen 10 liegende Fahrbahnabschnitte erfassen und überprüfen, ob der Fahrbahnabschnitt eine Kurve aufweiset, welche einen vorgegebenen Kurvenradius unterschreitet, und, falls dies der Fall ist, vor dem Durchfahren des Fahrbahnabschnittes der Allradantrieb zugeschaltet wird. Es können dafür beispielsweise eine Kamera, ein Photomischdetektor (PMD), ein Position Sensitive Detector (PST), ein Laser, ein Radar und dergleichen eingesetzt werden, um insbesondere in Fahrtrichtung vor dem Kraftwagen 10 liegende enge Kurven zu erkennen. Ferner kann auch eine entsprechende Navigationseinrichtung des Kraftwagens 10 zur Erkennung in Fahrtrichtung vor dem Kraftwagen 10 liegender enger Kurven herangezogen werden. In Kenntnis des Fahrertyps und weiterer, die Bewegung des Kraftwagens charakterisierender Größen, wie beispielsweise die aktuelle Geschwindigkeit des Kraftwagens, dessen Beschleunigung und dergleichen, trägt die Erkennung in Fahrtrichtung vor dem Kraftwagen liegender enger Kurven dazu bei, dass besonders rechtzeitig der Allradantrieb zugeschaltet werden kann. Die Umfeldsensoren können dabei beispielsweise Teil der Erfassungseinrichtung 14 sein.

Die Erfassungseinrichtung 14 kann darüber hinaus auch einen Mehrebenenlaserscanner umfassen, der unterhalb und/oder vor dem Kraftwagen 10 liegende Fahrbahnabschnitte überwacht und basierend darauf einen Reibbeiwert des unterhalb und/oder vor dem Kraftwagen liegenden Fahrbahnabschnitts ermittelt. Dies trägt insbesondere bei der anhand von Fig. 2 erläuterten Traktionsvorsteuerung dazu bei, besonders aktuelle Istwerte für den Reibbeiwert µᵢₛₜ zu ermitteln, so dass vorausschauend besonders akkurat ermittelt werden kann, ob ein Zuschalten des Allradantriebes zur Verhinderung von Traktionsverlusten oder einem Durchdrehen der Räder erfolgen sollte.

Des Weiteren können von einem oder mehreren Fahrerassistenzsystemen des Kraftwagens 10 eine zukünftige Beschleunigung und/oder ein zukünftigger Sollradius des Kraftwagens 10 bereitgestellt und unter Berücksichtigung dieser Größen abgeschätzt werden, ob eine relevante Fahrsituation bevorsteht, und in diesem Fall der Allradantrieb vor Eintreten der relevanten Situation zugeschaltet wird. Je nachdem, welche Fahrerassistenzsysteme des Kraftwagens eingesetzt werden, kann der Kraftwagen 10 mit einem unterschiedlichen Automatisierungsgrad bewegt werden. Beispielsweise kann der Kraftwagen 10 über einen Abstandsregeltempomaten verfügen, welcher den Kraftwagen 10 automatisch beschleunigt und abbremst. Insofern ist eine entsprechende Wunschbeschleunigung oder Sollbeschleunigung aₓ des Kraftwagens 10 bekannt, welche zur Beurteilung der Notwendigkeit eines Zuschaltens des Allradantriebs herangezogen werden kann. Ferner kann der Kraftwagen einen Spurhalteassistenten aufweisen, welcher beispielsweise dazu ausgelegt sein kann, den Kraftwagen 10 selbständig zu lenken, um diesen innerhalb einer Spur zu halten. Ein solcher Spurhalteassistent kann jeweilige Sollradien rₛₒₗₗ ausgeben bzw. bereitstellen, mittels welchen ebenfalls abgeschätzt werden kann, ob ein frühzeitiges und vorausschauendes Zuschalten des Allradantriebs zur Verbesserung der Fahrdynamik des Kraftwagens 10 erforderlich sein könnte.

Insgesamt kann durch das erläuterte Verfahren und System zum Betreiben des Antriebsstrangs des Kraftwagens 10 in den allermeisten Fällen ein Wechsel in einen Vierradantrieb so rechtzeitig erfolgen, dass das Zuschalten, also die Synchronisation auf Raddrehzahlniveau und Schließen der als Klauenkupplung ausgebildeten Kupplung 20 komfortabel und für einen Fahrer kaum spürbar erfolgen kann. Mit dem vorgestellten Verfahren, welches als Betriebsstrategie zum Betrieben des Antriebsstrangs zu verstehen ist, ist nicht erst eine Regeldifferenz, z.B. durchdrehende Vorräder bei einer Volllastbeschleunigung oder einer sehr zügigen Kurvenfahrt, zur Zuschaltung der Sekundärachse 24 bzw. eines Allradantriebes notwendig. Durch die Nutzung des aktuell geschätzten Reibbeiwertes sowie des Fahrertyps lässt sich eine nennenswerte Kraftstoffersparnis erzielen, ohne dabei zu große Traktionsoder Fahrdynamikeinbußen in Kauf nehmen zu müssen. Ferner wird durch die Nutzung von Fahrerassistenzsystem-Umfeldsensoren eine vorausschauende Zuschaltung des Allradantriebs verbessert. Infolgedessen können der Komfort und die Zuverlässigkeit der Zuschaltung bzw. Abschaltung des Allradantriebes erhöht werden.

## Patentansprüche

1. Verfahren zum Betreiben eines Antriebsstrangs eines Kraftwagens (10), mit den Schritten:
- Erfassen von zumindest einer eine Bewegung des Kraftwagens (10) quantifizierenden und/oder beeinflussenden Größe (M_{mot,pot}, F_{z,ist}, F_{y,ist}, Mₘₐₓ, _{Fx,ist}, v_{RadVL}, v_{RadVR}, v_{RadHL}, v_{RadHR}, δ_{Rad}, v_{Ref}, *ψ̇*, a_{y}, *ψ̇*ₛ, v, US, OS);
- Zuschalten eines Allradantriebes des Kraftwagens (10) in Abhängigkeit von der Größe (M_{mot,pot}, F_{z,ist}, F_{y,ist}, Mₘₐₓ, FX_{,ist}, v_{RadVL}, v_{RadVR}, v_{RadHL}, v_{RadHR}, δ_{Rad}, v_{Ref}, *ψ̇*, a_{y}, *ψ̇ₛ* , V, US, OS);
wobei
basierend auf der zumindest einen Größe (M_{mot.pot}, F_{z,ist}, F_{y,ist}, Mₘₐₓ, FX_{,ist}, v_{RadVL}, v_{RadVR}, v_{RadHL}, v_{RadHR}, δ_{Rad}, v_{Ref}, *ψ̇*, a_{y}, *ψ̇*ₛ, v, US, OS) abgeschätzt wird, ob eine relevante Fahrsituation bevorsteht, und in diesem Fall der Allradantrieb vor Eintreten der relevanten Situation zugeschaltet wird, wobei unter einer relevanten Fahrsituation Fahrsituationen zu verstehen sind, bei welchen mit einer Abweichung zwischen einem tatsächlichen Fahrverhalten des Kraftwagens und einem von einem Fahrer vorgegebenen Fahrverhalten zu rechnen ist, oder jede Situation zu verstehen ist, in der ein für den Fahrer auflösbares unter-schiedliches Fahrverhalten zwischen Einachs- und Allradbetrieb besteht,
**dadurch gekennzeichnet, dass**
mittels Umfeldsensoren des Kraftwagens und/oder einer Navigationseinrichtung des Kraftwagens (10) ein in Fahrtrichtung vor dem Kraftwagen (10) liegender Fahrbahnabschnitt erfasst und überprüft wird, ob der Fahrbahnabschnitt eine Kurve aufweist, welche einen vorgegebenen Kurvenradius unterschreitet, und falls dies der Fall ist, vor dem Durchfahren des Fahrbahnabschnittes der Allradantrieb zugeschaltet wird bevor es zu einer relevanten Fahrsituation kommen kann.

2. Verfahren zum Betreiben eines Antriebsstrangs eines Kraftwagens (10), mit den Schritten:
- Erfassen von zumindest einer eine Bewegung des Kraftwagens (10) quantifizierenden und/oder beeinflussenden Größe (M_{mot,pot}, F_{z,ist}, F_{y,ist}, Mₘₐₓ, FX,ᵢₛₜ, v_{RadVL}, v_{RadVR}, v_{RadHL}, v_{RadHR,} δ_{Rad}, v_{Ref}, *ψ̇*, a_{y}, *ψ̇ₛ* , v, US, OS);
- Zuschalten eines Allradantriebes des Kraftwagens (10) in Abhängigkeit von der Größe (M_{mot,pot}, F_{z,ist}, F_{y,ist}, Mₘₐₓ, F_{x,ist}, v_{RadVL}, v_{RadVR}, v_{RadHL}, v_{RadHR}, δ_{Rad}, v_{Ref}, *ψ̇,* a_{y}, *ψ̇*ₛ, v, US, OS);
wobei
basierend auf der zumindest einen Größe (M_{mot,pot}, F_{z,ist}, F_{y,ist}, Mₘₐₓ, Fx_{,ist}, v_{RadVL}, v_{RadVR}, v_{RadHL}, v_{RadHR}, δ_{Rad}, v_{Ref}, *ψ̇*, a_{y}, *ψ̇ₛ* , v, US, OS) abgeschätzt wird, ob eine relevante Fahrsituation bevorsteht, und in diesem Fall der Allradantrieb vor Eintreten der relevanten Situation zugeschaltet wird, wobei unter einer relevanten Fahrsituation Fahrsituationen zu verstehen sind, bei welchen mit einer Abweichung zwischen einem tatsächlichen Fahrverhalten des Kraftwagens und einem von einem Fahrer vorgegebenen Fahrverhalten zu rechnen ist, oder jede Situation zu verstehen ist, in der ein für den Fahrer auflösbares unterschiedliches Fahrverhalten zwischen Einachs- und Allradbetrieb besteht,
**dadurch gekennzeichnet, dass**
von einem oder mehreren Fahrerassistenzsystemen des Kraftwagens (10), mittels welchen ein teilautonomer oder autonomer Betrieb des Kraftwagens (10) ermöglicht wird, eine zukünftige Beschleunigung (aₓ) und/oder ein zukünftiger Sollradius (rₛₒₗₗ) des Kraftwagens (10) bereitgestellt und unter Berücksichtigung dieser Größen (aₓ, rₛₒₗₗ) abgeschätzt wird, ob eine relevante Fahrsituation bevorsteht, und in diesem Fall der Allradantrieb vor Eintreten der relevanten Situation zugeschaltet wird.

3. Verfahren nach Anspruch 1 oder 2,
**dadurch gekennzeichnet, dass**
zum Abschätzen, ob eine relevante Fahrsituation bevorsteht, überprüft wird, ob ein an einer permanent angetriebenen Primärachse (22) des Kraftwagens (10) aufbringbares Moment (Mₚₒₜ) größer als ein maximal an der Primärachse auf die Fahrbahn übertragbares Moment (Mₘₐₓ) ist, und falls dies zutrifft, abgeschätzt wird, ob ein Fahrer einen so großen Anteil des aufbringbaren Moments (Mₚₒₜ) abrufen wird, dass dieser Anteil größer als das übertragbare Moment (Mₘₐₓ) ist, und falls dies zutrifft, der Allradantrieb zugeschaltet wird.

4. Verfahren nach Anspruch 3,
**dadurch gekennzeichnet, dass**
das maximal an der Primärachse (22) auf die Fahrbahn übertragbare Moment (Mₘₐₓ) anhand eines Reibbeiwertes (µᵢₛₜ), einer jeweiligen auf die Räder (28) der Primärachse (22) einwirkenden Radlast (F_{z,ist}) und jeweiligen auf die Räder (28) der Primärachse (22) einwirkenden Seitenkraft (F_{y,ist}, F_{x,ist}) ermittelt wird.

5. Verfahren nach einem der vorhergehenden Ansprüche,
**dadurch gekennzeichnet, dass**
anhand einer Querbeschleunigung (a_{y}), Sollgierrate (*ψ̇*ₛ) und/oder Geschwindigkeit (v) des Kraftwagens (10) in Kombination mit einer Abschätzung des Fahrverhaltens des Fahrers überprüft wird, ob mit einer relevanten Fahrsituation zu rechnen ist, und falls dies zutrifft, der Allradantrieb zugeschaltet wird.

6. Verfahren nach einem der Ansprüche 3 bis 5,
**dadurch gekennzeichnet, dass**
die Abschätzung des Fahrverhaltens des Fahrers unter Berücksichtung eines aktivierten, die Fahrdynamik des Kraftwagens (10) beeinflussenden Betriebsmodus des Kraftwagens (10) erfolgt.

7. Verfahren nach einem der Ansprüche 3 bis 6,
das abgeschätzte Fahrverhalten des Fahrers und das tatsächliche Fahrverhalten des Fahrers fortlaufend verglichen und zur Abschätzung des Fahrverhaltens des Fahrers herangezogen wird.

8. Verfahren nach einem der vorhergehenden Ansprüche,
**dadurch gekennzeichnet, dass**
ermittelt wird, ob ein in Abhängigkeit von dem aktivierten, die Fahrdynamik des Kraftwagens beeinflussenden Betriebsmodus vorgegebener Schwellwert für einen Schlupf (Δs) an einem der Räder (28) der permanent angetriebenen Primärachse (22) des Kraftwagens (10) (10)überschritten wird, und falls dies zutrifft, der Allradantrieb zugeschaltet wird.

9. Verfahren nach einem der vorhergehenden Ansprüche,
**dadurch gekennzeichnet, dass**
ermittelt wird, ob ein jeweiliger, in Abhängigkeit von dem aktivierten, die Fahrdynamik des Kraftwagens (10) beeinflussenden Betriebsmodus vorgegebener Schwellwert für ein Übersteuern (OS) und Untersteuern (US) des Kraftwagens (10) überschritten wird, und falls dies zutrifft, der Allradantrieb zugeschaltet wird.

10. Verfahren nach einem der vorhergehenden Ansprüche,
**dadurch gekennzeichnet, dass**
nachdem der Allradantrieb zugeschaltet worden ist, anhand der zumindest einen Größe (M_{mot,pot}, F_{z,ist}, F_{y,ist}, Mₘₐₓ, Fx_{,ist}, v_{RadVL}, v_{RadVR}, v_{RadHL}, v_{RadHR}, δ_{Rad}, v_{Ref}, *ψ̇,* a_{y}, *ψ̇*ₛ, v, US, OS) und/oder weiterer die Bewegung des Kraftwagens (10) quantifizierenden und/oder beeinflussenden Größen ermittelt wird, ob ein Abschalten des Allradantriebes zu einer relevanten Fahrsituation führen würde, und falls dies nicht der Fall ist, der Allradantrieb nach einer vorgegebenen Haltezeit (ASV) abgeschaltet wird.

11. Verfahren nach Anspruch 10,
**dadurch gekennzeichnet, dass**
die Haltezeit (ASV) in Abhängigkeit von dem jeweils aktivierten, die Fahrdynamik des Kraftwagens (10) beeinflussenden Betriebsmodus und/oder von dem abgeschätzten Fahrverhalten des Fahrers vorgegeben wird.

12. Verfahren nach einem der vorhergehenden Ansprüche,
**dadurch gekennzeichnet, dass**
mittels einer Erfassungseinrichtung (14) des Kraftwagens (10), insbesondere mittels eines Mehrebenenlaserscanners, der unterhalb und/oder vor dem Kraftwagen (10) liegende Fahrbahnabschnitt überwacht und basierend darauf ein Reibbeiwert (µᵢₛₜ) des unterhalb und/oder vor dem Kraftwagen liegenden Fahrbahnabschnitts ermittelt wird.

13. System zum Betreiben eines Antriebsstrangs eines Kraftwagens (10), mit
- einer Erfassungseinrichtung (14), welche dazu ausgelegt ist, zumindest eine eine Bewegung des Kraftwagens (10) quantifizierende und/oder beeinflussende Größe (M_{mot,pot}, F_{z,ist,} F_{y,ist}, Mₘₐₓ, Fx_{,ist}, v_{RadVL}, v_{RadVR}, v_{RadHL}, v_{RadHR}, δ_{Rad}, v_{Ref}, *ψ̇*, a_{y}, *ψ̇ₛ,* v, US, OS) zu erfassen;
- einer Steuereinrichtung (16), welche dazu ausgelegt ist, einen All-radantrieb des Kraftwagens (10) in Abhängigkeit von der Größe (M_{mot,pot}, F_{z,ist}, F_{y,ist}, Mₘₐₓ, Fx_{,ist,} v_{RadVL}, v_{RadVR}, v_{RadHL}, v_{RadHR}, δ_{Rad}, v_{Ref}, *ψ̇,* a_{y}, *ψ̇*ₛ, v, US, OS) zuzuschalten;
wobei
die Steuereinrichtung (16) dazu ausgelegt ist, basierend auf der zumindest einen Größe (M_{mot,pot}, F_{z,ist}, F_{y,ist}, Mₘₐₓ, Fx_{,ist}, v_{RadVL}, v_{RadVR}, v_{RadHL}, v_{RadHR}, δ_{Rad}, v_{Ref}, *ψ̇*, a_{y}, *ψ̇*ₛ , v, US, OS) abzuschätzen, ob eine relevante Fahrsituation bevorsteht, und nur in diesem Fall den Allradantrieb vor Eintreten der relevanten Situation zuzuschalten, wobei unter einer relevanten Fahrsituation Fahrsituationen zu verstehen sind, bei welchen mit einer Abweichung zwischen einem tatsächlichen Fahrverhalten des Kraftwagens und einem von einem Fahrer vorgegebenen Fahrverhalten zu rechnen ist, oder jede Situation zu verstehen ist, in der ein für den Fahrer auflösbares unterschiedliches Fahrverhalten zwischen Einachs- und Allradbetrieb besteht,
**dadurch gekennzeichnet, dass**
die Steuereinrichtung (16) dazu ausgelegt ist, vor dem Durchfahren eines Fahrbahnabschnittes bevor es zu einer relevanten Fahrsituation kommen kann den Allradantrieb zuzuschalten, falls mittels Umfeldsensoren des Kraftwagens und/oder einer Navigationseinrichtung des Kraftwagens (10) der in Fahrtrichtung vor dem Kraftwagen (10) liegende Fahrbahnabschnitt erfasst und ermittelt wird, dass der Fahrbahnabschnitt eine Kurve aufweist, welche einen vorgegebenen Kurvenradius unterschreitet.

14. System zum Betreiben eines Antriebsstrangs eines Kraftwagens (10), mit
- einer Erfassungseinrichtung (14), welche dazu ausgelegt ist, zumindest eine eine Bewegung des Kraftwagens (10) quantifizierende und/oder beeinflussende Größe (M_{mot,pot}, F_{z,ist}, F_{y,ist}, Mₘₐₓ, Fx_{,ist}, v_{RadVL}, v_{RadVR}, v_{RadHL}, v_{RadHR}, δ_{Rad}, v_{Ref}, *ψ̇,* a_{y}, *ψ̇_{s,}* v_{,} US, OS) zu erfassen;
- einer Steuereinrichtung (16), welche dazu ausgelegt ist, einen Allradantrieb des Kraftwagens (10) in Abhängigkeit von der Größe (M_{mot,pot}, F_{z,ist}, F_{y,ist}, Mₘₐₓ, Fx_{,ist}, v_{RadVL}, v_{RadVR}, v_{RadHL}, v_{RadHR}, δ_{Rad}, v_{Ref}, *ψ̇*, a_{y}, *ψ̇*ₛ, v, US, OS) zuzuschalten;
wobei
die Steuereinrichtung (16) dazu ausgelegt ist, basierend auf der zumindest einen Größe (M_{mot,pot}, F_{z},ᵢₛₜ, F_{y,ist}, Mₘₐₓ, Fx_{,ist}, v_{RadVL}, v_{RadVR}, v_{RadHL}, v_{RadHR}, δ_{Rad}, v_{Ref}, *ψ̇*, a_{y}, *ψ̇*ₛ, v, US, OS) abzuschätzen, ob eine relevante Fahrsituation bevorsteht, und nur in diesem Fall den Allradantrieb vor Eintreten der relevanten Situation zuzuschalten, wobei unter einer relevanten Fahrsituation Fahrsituationen zu verstehen sind, bei welchen mit einer Abweichung zwischen einem tatsächlichen Fahrverhalten des Kraftwagens und einem von einem Fahrer vorgegebenen Fahrverhalten zu rechnen ist, oder jede Situation zu verstehen ist, in der ein für den Fahrer auflösbares unterschiedliches Fahrverhalten zwischen Einachs- und Allradbetrieb besteht,
**dadurch gekennzeichnet, dass**
die Steuereinrichtung (16) dazu ausgelegt ist, unter Berücksichtigung von einer durch ein oder mehrere Fahrerassistenzsystemen des Kraftwagens (10), mittels welchen ein teilautonomer oder autonomer Betrieb des Kraftwagens (10) ermöglicht wird, bereitgestellten zukünftigen Beschleunigung (aₓ) und/oder von einem bereitgestellten zukünftigen Sollradius (rₛₒₗₗ) des Kraftwagens (10) abzuschätzen, ob eine relevante Fahrsituation bevorsteht, und in diesem Fall den Allradantrieb vor Eintreten der relevanten Situation zuzuschalten.

## Claims

1. Method for operating a drive train of a motor vehicle (10), comprising the steps:
- detecting at least one variable quantifying and/or influencing a movement of the motor vehicle (10) (M_{mot,pot}, F_{z,ist}, F_{y,ist}, Mₘₐₓ, F_{x,ist}, v_{RadVL}, v_{RacVR}, v_{RadHL}, v_{RadHR}, δ_{Rad}, v_{Ref,} ψ, a_{y}, ψₛ, v, US, OS);
- switching on an all-wheel drive of the motor vehicle (10) as a function of the variable (M_{mot,pot}, F_{z,ist}, F_{y,ist}, Mₘₐₓ, F_{x,ist}, v_{RadVL}, v_{RadVR}, v_{RadHL}, v_{RadHR}, δ_{Rad}, v_{Ref}, ψ, a_{y}, ψs, v, US, OS);
wherein on the basis of the at least one variable (M_{mot,pot,} F_{z,ist}, F_{y,ist}, Mₘₐₓ, F_{x,ist}, v_{RadVL}, v_{RadVR}, v_{RadHL,} v_{RadHR}, δ_{Rad}, v_{Ref}, ψ, a_{y}, ψs, v, US, OS) it is estimated whether a relevant driving situation is imminent, and in this case the all-wheel drive is switched on before the occurrence of the relevant situation, wherein a relevant driving situation is defined as a driving situation in which a deviation can be expected between the actual driving behaviour of the motor vehicle and the driving behaviour determined by the driver, or as every situation where there is a different driving behaviour between single-axle operation and all-wheel drive operation discernible by the driver, **characterised in that** by means of surround sensors of the motor vehicle and/or a navigation device of the motor vehicle (10) a section of the road lying in drive direction in front of the motor vehicle (10) is detected and checked to see whether the section of road has a curve which falls below a predefined curve radius and if this is the case before driving along the section of road the all-wheel drive is switched on before the relevant driving situation occurs.

2. Method for operating a drive train of a motor vehicle (10), comprising the steps:
- detecting at least one variable quantifying and/or influencing a movement of the motor vehicle (10) (M_{mot,pot}, F_{z,ist}, F_{y,ist}, Mₘₐₓ, F_{x,ist}, v_{RadVL}, v_{RadVR}, v_{RadHL}, v_{RadHR}, δ_{Rad}, v_{Ref}, ψ, a_{y}, ψs, v, US, OS);
- switching on an all-wheel drive of the motor vehicle (10) as a function of the variable (M_{mot,pot}, F_{z,ist}, F_{y,ist}, Mₘₐₓ, F_{x,ist}, v_{RadVL}, v_{RadVR}, v_{RadHL}, v_{RadHR}, δ_{Rad}, v_{Ref}, ψ, a_{y}, ψs, v, US, OS) ;
wherein on the basis of the at least one variable (M_{mot,pot}, F_{z,ist}, F_{y,ist}, Mₘₐₓ, Fₓ,ᵢₛₜ, v_{RadVL}, v_{RadVR}, v_{RadHL,} v_{RadHR}, δ_{Rad}, v_{Ref}, ψ, a_{y}, ψs, v, US, OS) it is estimated whether a relevant drive situation is imminent, and in this case the all-wheel drive is switched on before the occurrence of the relevant situation, wherein a relevant driving situation is defined as a driving situation in which a deviation can be expected between the actual driving behaviour of the motor vehicle and the driving behaviour determined by the driver, or as every situation where there is a different driving behaviour between single-axle operation and all-wheel drive operation discernible by the driver, **characterised in that** by means of one or more driver assist systems of the motor vehicle (10), by means of which a semi-autonomous or autonomous operation of the motor vehicle (10) is made possible, a future acceleration (aₓ) and/or a future target radius (rₛₒₗₗ) of the motor vehicle (10) is provided and taking into consideration said variables (aₓ, rₛₒₗₗ) it is estimated whether a relevant driving situation is imminent and in this case the all-wheel drive is switched on before the occurrence of the relevant situation.

3. Method according to claim 1 or 2, **characterised in that** to estimate whether a relevant driving situation is imminent, a check is performed to see whether a moment (Mₚₒₜ) applied to a permanently driven primary axle (22) of the motor vehicle (10) is greater than a maximum moment (Mₘₐₓ) transferable at the primary axle to the road, and if this is the case, it is estimated whether a driver will require such a large portion of the applicable moment (Mₚₒₜ), that said portion is greater than the transferable moment (Mₘₐₓ) and if this is the case the all-wheel drive is switched on.

4. Method according to claim 3, **characterised in that** the maximum moment (Mₘₐₓ) transferable at the primary axle to the road is determined with reference to a coefficient of friction (µᵢₛₜ), a respective wheel load (F_{z,ist}) acting on the wheels (28) of the primary axle (22) and respective lateral force (F_{y,ist}, Fₓ,ᵢₛₜ) acting on the wheels (28) of the primary axle (22).

5. Method according to any one of the preceding claims, **characterised in that** by means of a lateral acceleration (a_{y}), target yaw rate (ψₛ) and/or velocity (v) of the motor vehicle (10) in combination with an estimation of the driving behaviour of the driver it is checked to see whether a relevant driving situation can be expected, and if this is the case the all-wheel drive is switched on.

6. Method according to any one of claims 3 to 5, **characterised in that** the driving behaviour of the driver is estimated by taking into account an activated mode of operation of the motor vehicle (10) that influences the driving dynamics of the motor vehicle (10).

7. Method according to any one of claims 3 to 6, **characterised in that** the estimated driving behaviour of the driver and the actual driving behaviour of the driver is continuously compared and used to estimate the driving behaviour of the driver.

8. Method according to any one of the preceding claims, **characterised in that** it is determined whether a predetermined threshold value for a slip (Δs) at one of the wheels (28) of the permanently driven primary axle (22) of the motor vehicle (10) (10) has been exceeded as a function of the activated mode of operation influencing the driving dynamics of the motor vehicle and if this is the case the all-wheel drive is switched on.

9. Method according to any one of the preceding claims, **characterised in that** it is determined whether a respective predetermined threshold value for an oversteer (OS) and understeer (US) of the motor vehicle (10) has been exceeded which is dependent on the activated mode of operation influencing the drive dynamics of the motor vehicle (10), and if this is the case the all-wheel drive is switched on.

10. Method according to any one of the preceding claims, **characterised in that** after the all-wheel drive has been switched on, it is determined based on the least one variable (M_{mot,pot}, F_{z,ist}, F_{y,ist}, Mₘₐₓ, F_{x,ist}, v_{RadVL}, v_{RadVR}, v_{RadHL,} v_{RadHR}, δ_{Rad}, v_{Ref}, ψ, a_{y}, ψs, V, US, OS) and/or additional variables quantifying and/or influencing the movement of the motor vehicle (10), whether switching off the all-wheel drive would lead to a relevant driving situation, and if this is not the case the all-wheel drive is switched off after a predetermined holding period (ASV).

11. Method according to claim 10, **characterised in that** the holding period (ASV) is predetermined as a function of the respectively activated mode of operation influencing the driving dynamic of the motor vehicle (10) and/or as a function of the estimated driving behaviour of the driver.

12. Method according to any one of the preceding claims, **characterised in that** by means of a detecting device (14) of the motor vehicle (10), in particular by means of a multi-level laser scanner, the section of road underneath and/or in front of the motor vehicle (10) is monitored and based on this a coefficient of friction (µᵢₛₜ) of the section of road underneath and/or in front of the motor vehicle is determined.

13. System for operating a drive train of a motor vehicle (10), comprising
- a detection device (14) configured to detect at least one variable quantifying or influencing a movement of the motor vehicle (Mₘₒₜ,ₚₒₜ, F_{z,ist,} F_{y,ist}, Mₘₐₓ, F_{x,ist}, v_{RadVL}, v_{RadVR}, v_{RadHL}, v_{RadHR}, δ_{Rad}, v_{Ref}, ψ, a_{y}, ψs, v, US, OS);
- a control device (16) which is configured to switch on an all-wheel drive of the motor vehicle (10) as a function of the variable (M_{mot,pot}, F_{z,ist}, F_{y,ist}, Mₘₐₓ, F_{x,ist}, v_{RadVL}, v_{RadVR}, v_{RadHL}, v_{RadHR}, δ_{Rad}, v_{Ref}, ψ, a_{y}, ψs, v, US, OS;
wherein the control device (16) is configured, based on the at least one variable (M_{mot,pot}, F_{z,ist}, F_{y,ist}, Mₘₐₓ, F_{x,ist}, v_{RadVL}, v_{RadVR}, v_{RadHL}, v _{RadHR}, δ_{Rad,} v_{Ref}, ψ, a_{y}, ψs, v, US, OS) to estimate whether a relevant drive situation is imminent, and only in this case to switch on the all-wheel drive before the occurrence of the relevant situation, wherein a relevant drive situation is defined as a drive situation in which a deviation can be expected between the actual driving behaviour of the motor vehicle and the driving behaviour determined by the driver, or as every situation where there is a different driving behaviour between single-axle operation and all-wheel drive operation discernible by the driver, **characterised in that** the control device (16) is designed to switch on the all-wheel drive before driving along a section of road before a relevant drive situation can occur, if surround sensors of the motor vehicle and/or a navigation device of the motor vehicle (10) detect and determine on the section of road section in drive direction in front of the motor vehicle (10) that the section of road has a curve which falls below a predefined curve radius.

14. System for operating a drive train of a motor vehicle (10) comprising
- a detecting device (14) which is designed to detect at least one variable (M_{mot,pot}, F_{z,ist}, F_{y,ist}, Mₘₐₓ, F_{x,ist}, v_{RadVL}, v_{RadVR}, v_{RadHL}, v_{RadHR}, δ_{Rad}, v_{Ref}, ψ, a_{y}, ψs, v, US, OS) quantifying and/or influencing a movement of the motor vehicle (10);
- a control device (16) which is configured to switch on the all-wheel drive of the motor vehicle (10) as a function of the variable (M_{mot,Pot}, F_{z,ist}, F_{y,ist}, Mₘₐₓ, F_{x,ist}, v_{RadVL}, v_{RadVR}, v_{RadHL}, v_{RadHR}, δ_{Rad}, v_{Ref}, ψ, a_{y}, ψs, v, US, OS);
wherein the control device (16) is configured, based on the at least one variable (M_{mot,pot}, F_{z,ist}, F_{y,ist}, Mₘₐₓ, F_{x,ist}, v_{RadVL}, v_{RadVR}, v_{RadHL}, v_{RadHR}, δ _{Rad}, v _{Ref}, ψ, a_{y}, ψs, v, US, OS), to estimate whether a relevant drive situation is imminent and only in this case to switch on the all-wheel drive before the occurrence of the relevant situation, wherein a relevant drive situation is defined as a drive situation in which a deviation can be expected between the actual driving behaviour of the motor vehicle and the driving behaviour determined by the driver, or as every situation where there is a different driving behaviour between single-axle operation and all-wheel drive operation discernible by the driver,
**characterised in that** the control device (16) is configured in consideration of a future acceleration (aₓ) provided by one or more driver assist systems of the motor vehicle (10), by means of which a semi-autonomous or autonomous operation of the motor vehicle (10) is possible, and/or a provided future target radius (rₛₒₗₗ) of the motor vehicle (10) to estimate whether a relevant driving situation is imminent and in this case to switch on the all-wheel drive before the occurrence of the relevant situation.

## Revendications

1. Procédé pour faire fonctionner une chaîne cinématique d'un véhicule automobile (10) selon les étapes consistant à:
- détecter au moins une grandeur (M_{mot.pot}, F_{z,ist}, F_{y,ist}, Mₘₐₓ, F_{x,ist}, V_{RadVL}, V_{RadVR}, V_{RadHL}, V_{RadHR}, δ_{Rad}, V_{Ref}, *ψ̇*, a_{y}, *ψ̇ₛ* v, US, OS) quantifiant et/ou influençant un déplacement du véhicule automobile (10) ;
- connecter une traction 4x4 du véhicule automobile (10) en fonction de la grandeur (M_{mot.pot}, F_{z,ist}, F_{y,ist}, Mₘₐₓ, F_{x,ist}, V_{RadVL}, V_{RadVR}, V_{RadHL}, V_{RadHR}, δ_{Rad}, V_{Ref}, *ψ̇,* a_{y}, *ψ̇ₛ,* v, US, OS) ;
dans lequel,
sur la base de la au moins une grandeur (M_{mot.pot}, F_{z,ist}, F_{y,ist}, Mₘₐₓ, F_{x,ist}, V_{RadVL}, V_{RadVR}, V_{RadHL}, V_{RadHR}, δ_{Rad}, V_{Ref}, *ψ̇,* a_{y}, *ψ̇ₛ,* v, US, OS), on évalue si une situation de conduite pertinente est en vue et, dans ce cas, la traction 4x4 est connectée avant l'arrivée de la situation pertinente, dans lequel on entend par situation de conduite pertinente des situations de conduite dans lesquelles il faut compter sur une différence entre un comportement de conduite réel du véhicule automobile et un comportement de conduite prédéfini par un conducteur ou il faut entendre toute situation dans laquelle il y a un comportement de conduite résoluble pour le conducteur entre traction à deux roues et traction 4x4,
**caractérisé en ce que**,
au moyen de capteurs d'ambiance du véhicule automobile et/ou d'un dispositif de navigation du véhicule automobile (10), on détecte une section de chaussée se trouvant devant le véhicule automobile (10) dans le sens de la marche, que l'on vérifie pour voir si la section de chaussée présente une courbe qui se situe en dessous d'un rayon de courbure prédéfini et, si c'est le cas, on connecte la traction 4x4 avant de négocier la section de chaussée avant que l'on puisse en arriver à une situation pertinente.

2. Procédé pour faire fonctionner une chaîne cinématique d'un véhicule automobile (10) selon les étapes consistant à :
- détecter au moins une grandeur (M_{mot.pot}, F_{z,ist}, F_{y,ist,} Mₘₐₓ, F_{x,ist}, V_{RadVL}, V_{RadVR}, V_{RadHL}, V_{RadHR}, δ_{Rad}, V_{Ref}, *ψ̇*, a_{y}, *ψ̇ₛ*, v, US, OS) quantifiant et/ou influençant un déplacement du véhicule automobile (10) ;
- connecter une traction 4x4 du véhicule automobile (10) en fonction de la grandeur (M_{mot.pot}, F_{z,ist}, F_{y,ist,} M_{max,} F_{x,ist,} V_{RadVL,} V_{RadVR}, V_{RadHL}, V_{RadHR,} δ_{Rad,} V_{Ref,} *ψ̇,* a_{y}, *ψ̇*_{*s*,} v, US, OS) ;
dans lequel,
sur la base de la au moins une grandeur (M_{mot.pot}, F_{z,ist}, F_{y,ist}, Mₘₐₓ, F_{x,ist}, V_{RadVL,} V_{RadVR}, V_{RadHL}, V_{RadHR}, δ_{Rad,} V_{Ref}, *ψ̇*, a_{y}, *ψ̇ₛ,* v, US, OS), on évalue si une situation de conduite pertinente est en vue et, dans ce cas, la traction 4x4 est connectée avant l'arrivée de la situation pertinente, dans lequel on entend par situation de conduite pertinente des situations de conduite dans lesquelles il faut compter sur une différence entre un comportement de conduite réel du véhicule automobile et un comportement de conduite prédéfini par un conducteur ou il faut entendre toute situation dans laquelle il y a un comportement de conduite résoluble pour le conducteur entre traction à deux roues et traction 4x4,
**caractérisé en ce que**,
au moyen d'un ou plus de systèmes d'assistance au conducteur du véhicule automobile (10), permettant d'assurer une traction en partie autonome ou autonome du véhicule automobile (10), on prépare une accélération future (aₓ) et/ou un rayon théorique futur (rₛₒₗₗ) du véhicule automobile (10) et, en tenant compte de ces grandeurs (aₓ, rₛₒₗₗ), on évalue si une situation de conduite pertinente est en vue et, dans ce cas, on connecte la traction 4x4 avant l'arrivée de la situation pertinente.

3. Procédé selon la revendication 1 ou la revendication 2,
**caractérisé en ce que**,
pour évaluer si une situation de conduite pertinente est en vue, on vérifie si un couple (Mₚₒₜ) applicable à un essieu principal (22) entraîné en permanence du véhicule automobile (10) est supérieur à un couple (Mₘₐₓ) transférable au maximum à l'essieu principal sur la chaussée et, si cela s'avère concluant, on évalue si un conducteur prélève une fraction du couple applicable (Mₚₒₜ) si grande que cette fraction soit plus grande que le couple transférable (Mₘₐₓ) et, si cela s'avère concluant, la traction 4x4 est connectée.

4. Procédé selon la revendication 3,
**caractérisé en ce que** :
le couple (Mₘₐₓ) transférable au maximum à l'essieu principal (22) sur la chaussée est déterminé sur la base d'un coefficient d'adhérence (µᵢₛₜ), d'une charge de roue respective ((F_{z,ist}) agissant sur les roues (28) de l'essieu principal (22) et d'une force latérale respective (F_{y,ist}, F_{x,ist}) agissant sur les roues (28) de l'essieu principal (22).

5. Procédé selon l'une quelconque des revendications précédentes,
**caractérisé en ce que**,
sur la base d'une accélération transversale (a_{y}), de la vitesse de lacet théorique (*ψ̇ₛ*) et/ou de la vitesse (v) du véhicule automobile (10) en combinaison avec une évaluation du comportement de conduite du conducteur, on vérifie si l'on doit compter sur une situation de conduite pertinente et, au cas où cela s'avère concluant, la traction 4x4 est connectée.

6. Procédé selon l'une quelconque des revendications 3 à 5,
**caractérisé en ce que**,
l'évaluation du comportement de conduite du conducteur se fait en tenant compte d'un mode de traction activé du véhicule automobile (10) influençant la dynamique de conduite du véhicule automobile (10).

7. Procédé selon l'une quelconque des revendications 3 à 6,
**caractérisé en ce que**
le comportement de conduite évalué sur le conducteur et le comportement de conduite réel du conducteur sont comparés en permanence et l'on en tire l'évaluation du comportement de conduite du conducteur.

8. Procédé selon l'une quelconque des revendications précédentes,
**caractérisé en ce que**
l'on détermine si l'on dépasse une valeur de seuil prédéfinie en fonction du mode de traction activé influençant la dynamique de conduite du véhicule automobile pour un patinage (Δs) sur l'une des roues (28) de l'essieu principal (22) entraîné en permanence du véhicule automobile (10) (10) et, si cela est concluant, la traction 4x4 est connectée.

9. Procédé selon l'une quelconque des revendications précédentes,
**caractérisé en ce que**
l'on détermine si l'on dépasse une valeur de seuil prédéfinie en fonction du mode de traction activé influençant la dynamique de conduite du véhicule automobile (10) pour un survirage (OS) et un sous-virage (US) du véhicule automobile (10) et, si cela est concluant, la traction 4x4 est connectée.

10. Procédé selon l'une quelconque des revendications précédentes,
**caractérisé en ce que**,
une fois que la traction 4x4 a été connectée, sur la base de la au moins une grandeur (M_{mot.pot}, F_{z},ᵢₛₜ, F_{y,ist}, M_{max,} F_{x,ist,} V_{RadVL}, V_{RadVR,} V_{RadHL,} V_{RadHR,} δ_{Rad}, V_{Ref}, *ψ̇*, a_{y}, *ψ̇ₛ*, v, US, OS) et/ou d'autres grandeurs quantifiant et/ou influençant le déplacement du véhicule automobile (10), on détermine si une déconnexion de la traction 4x4 mènerait à une situation pertinente et, si ce n'est pas le cas, la traction 4x4 est déconnectée après un temps de maintien prédéfini (ASV).

11. Procédé selon la revendication 10,
**caractérisé en ce que** :
le temps de maintien (ASV) est prédéfini en fonction du mode de traction activé influençant la dynamique de conduite du véhicule automobile (10) et/ou du comportement de conduite évalué du conducteur.

12. Procédé selon l'une quelconque des revendications précédentes,
**caractérisé en ce que**,
au moyen d'un dispositif de détection (14) du véhicule automobile (10), en particulier au moyen d'un scanneur à laser multiniveau, la section de chaussée se trouvant en dessous et/ou devant le véhicule automobile (10) est surveillée et, sur la base de ce contrôle, on détermine un coefficient d'adhérence (µᵢₛₜ) de la section de chaussée se trouvant en dessous et/ou devant le véhicule automobile.

13. Système de fonctionnement d'une chaîne cinématique d'un véhicule automobile (10) comprenant :
- un dispositif de détection (14) qui est conçu pour détecter au moins une grandeur (M_{mot.}pₒₜ, F_{z,ist}, F_{y,ist,} Mₘₐₓ,F_{x,ist,} V_{RadVL}, V_{RadVR}, V_{RadHL,} V_{RadHR,} δ_{Rad}, V_{Ref}, *ψ̇*, a_{y}, *ψ̇ₛ,* v, US, OS) quantifiant et/ou influençant un déplacement du véhicule automobile (10) ;
- un dispositif de commande (16) qui est conçu pour connecter une traction 4 x 4 du véhicule automobile (10) en fonction de la grandeur (M_{mot.pot,} F_{z,ist,} F_{y,ist,} Mₘₐₓ, F_{x,ist,} V_{RadVL,} V_{RadVR,} V_{RadHL}, V_{RadHR,} δ_{Rad,} V_{Ref}, *ψ̇*, a_{y}, *ψ̇ₛ*, v, US, OS) ;
dans lequel :
le dispositif de commande (16) est conçu pour évaluer, sur la base de la au moins une grandeur (M_{mot.pot,} F_{z,ist}, F_{y,ist,} Mₘₐₓ, F_{x,ist,} V_{RadVL,} V_{RadVR,} V_{RadHL,} V_{RadHR,} δ_{Rad,} V_{Ref}, *ψ̇*, a_{y}, *ψ̇ₛ*, v, US, OS), si une situation de conduite pertinente est en vue et, dans ce cas, la traction 4x4 est connectée avant l'arrivée de la situation pertinente, dans lequel on entend par situation de conduite pertinente des situations de conduite dans lesquelles il faut compter sur une différence entre un comportement de conduite réel du véhicule automobile et un comportement de conduite prédéfini par un conducteur ou il faut entendre toute situation dans laquelle il y a un comportement de conduite résoluble pour le conducteur entre traction à deux roues et traction 4x4,
**caractérisé en ce que** :
le dispositif de commande (16) est conçu pour connecter la traction 4x4 avant de négocier une section de chaussée avant que l'on ne puisse arriver à une situation de conduite pertinente, au cas où, au moyen de capteurs d'ambiance du véhicule automobile et/ou d'un dispositif de navigation du véhicule automobile (10), on détecte la section de chaussée qui se trouve devant le véhicule automobile (10) dans le sens de la marche et l'on détermine que la section de chaussée présente une courbe qui se situe en dessous d'un rayon de courbure prédéfini.

14. Système de fonctionnement d'une chaîne cinématique d'un véhicule automobile (10) comprenant :
- un dispositif de détection (14) qui est conçu pour détecter au moins une grandeur (M_{mot.pot}, F_{z,ist}, F_{y,ist}, M_{max,} F_{x,ist,} V_{RadVL}, V_{RadVR}, V_{RadHL,} V_{RadHR,} δ_{Rad,} V_{Ref,} *ψ̇*, a_{y}, *ψ̇ₛ*, v, US, OS) quantifiant et/ou influençant un déplacement du véhicule automobile (10) ;
- un dispositif de commande (16) qui est conçu pour connecter une traction 4x4 du véhicule automobile (10) en fonction de la grandeur (M_{mot.pot}, F_{z,ist}, F_{y,ist,} M_{max,} F_{x,ist}, V_{RadVL}, V_{RadVR}, V_{RadHL,} V_{RadHR,} δ_{Rad,} V_{Ref}, *ψ̇*, a_{y}, *ψ̇ₛ*, v, US, OS) ;
dans lequel :
le dispositif de commande (16) est conçu pour évaluer, sur la base de la au moins une grandeur (M_{mot.pot}, F_{z,ist,} F_{y,ist}, M_{max,} F_{x,ist,} V_{RadVL,} V_{RadVR}, V_{RadHL}, V_{RadHR,} δ_{Rad}, V_{Ref,} *ψ̇*, a_{y}, *ψ̇ₛ*, v, US, OS), si une situation de conduite pertinente est en vue et, dans ce cas, la traction 4x4 est connectée avant l'arrivée de la situation pertinente, dans lequel on entend par situation de conduite pertinente des situations de conduite dans lesquelles il faut compter sur une différence entre un comportement de conduite réel du véhicule automobile et un comportement de conduite prédéfini par un conducteur ou il faut entendre toute situation dans laquelle il y a un comportement de conduite résoluble pour le conducteur entre traction à deux roues et traction 4x4,
**caractérisé en ce que** :
le dispositif de commande (16) est conçu pour évaluer, en tenant compte d'une accélération future (aₓ) préparée par un ou plus de systèmes d'assistance au conducteur du véhicule automobile (10) qui permette un fonctionnement en partie autonome ou autonome du véhicule automobile (10), et/ou d'un rayon théorique futur préparé (rₛₒₗₗ) du véhicule automobile (10), si une situation de conduite pertinente est en vue et, dans ce cas, connecter la traction 4x4 avant l'arrivée de la situation pertinente.
